# FASCICULE DE BREVET EUROPEEN

(11) **EP 1 241 842 B1**
(45) Date de publication et mention de la délivrance du brevet: **15.08.2007**
(21) Numéro de dépôt: 02290522.8
(22) Date de dépôt: 04.03.2002
(51) Int. Cl.: H04L 12/56

(54) **Procédé dichotomique pour la détermination d'un chemin entre deux noeuds d'un réseau de données**
Dichotomisches Verfahren zur Auswahl eines Weges zwischen zwei Knoten in einem Datennetzwerk
Dichotomic method for determining a path between two nodes of a data network

(30) Priorité: 15.03.2001 FR 0103530
(43) Date de publication de la demande: 18.09.2002
(73) Titulaire: Alcatel Lucent, 75008 Paris (FR)
(72) Inventeur: Marce, Olivier, 91300 Massy (FR)
(74) Mandataire: Chaffraix, Sylvain

(56) Documents cités:
- US-A- 5 675 741

## Description

La présente invention est relative à un procédé de détermination d'un chemin entre deux noeuds d'un réseau de données utilisant les protocoles de la famille TCP/IP (*Transmission Control Protocol* / *Internet Protocol*).

Typiquement, selon ces protocoles, chaque noeud du réseau n'a une vision que d'une partie du réseau, de sorte que la fonction d'acheminement est répartie à travers le réseau sans qu'aucun des noeuds n'ait la connaissance du chemin complet suivi par les paquets de données.

Ce protocole d'acheminement peut par exemple être TCP (*Transmission Control Protocol*) ou UDP (*User Datagram Protocol*).

Dans la majorité des cas, ces protocoles sont suffisants car en général, l'émetteur d'un paquet est uniquement intéressé par la transmission effective de son paquet, et non par le chemin exact qu'il suit. Toutefois, il existe quelques applications pour lesquelles la connaissance du chemin complet emprunté par les paquets est, sinon indispensable, tout du moins importante.

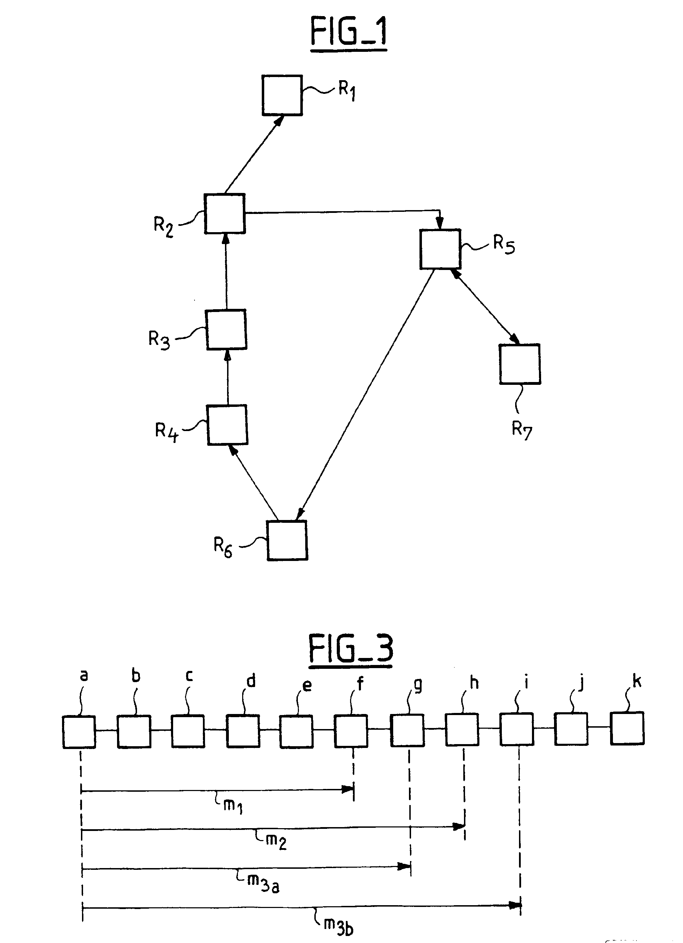

Une telle application est par exemple, la diffusion de paquets vers plusieurs destinataires, tel qu'illustré par la figure 1 et tel que décrit dans le RFC (Request for Comments) numéro 1054, intitulé *« Host Extensions for IP Multicasting* ».

Sur cette figure 1, on a représenté 7 noeuds R₁, R₂, R₃... R₇. Le noeud R₁ est l'émetteur de paquets de données. Ces paquets de données font typiquement partie d'un flux de données, par exemple de la vidéo. On a représenté aussi des flèches correspondant aux sens de communication de l'information entre les différents noeuds. Les double-flèches représentent des communications symétriques.

Les noeuds R₆ et R₇ sont intéressés par recevoir ce flux de données. Aussi, ils émettent à destination de la source du flux, R₁, un message d'enregistrement, par exemple un message "Join" selon le protocole IGMP (*Internet Group Management Protocol*) tel que défini dans le RFC 1112.

Le message d'enregistrement du noeud R₇ passe par les noeuds R₅ et R₂ avant d'aboutir au noeud source R₁. Par ailleurs, le message d'enregistrement du noeud R₆ passe par les noeuds R₄, R₃, R₂ et R₁.

Le flux de données va donc être transmis à la fois vers le noeud R₂ pour transmission vers le noeud R₆ et vers R₅ pour transmission vers le noeud R₅.

Si le noeud R₁ avait été à même de connaître le chemin exact vers chacun des noeuds destinataires, il aurait transmis un seul flux de données vers le noeud R₅, à charge pour lui de dupliquer ce flux d'une part vers le noeud R₇ et d'autre part vers le noeud R₆.

On voit donc que la méconnaissance du chemin complet entre les noeuds ne permet pas une utilisation optimale du réseau de données et le surcharge inutilement.

Une solution permettant de connaître un chemin entre deux noeuds a été proposée par le logiciel "TraceRoute", datant pour ses premières versions de 1988.

Son principe consiste à utiliser un paquet vers le noeud vers lequel on cherche un chemin, en lui fixant une durée de vie croissante. Chaque noeud traversé décrémente la durée de vie du paquet, d'une unité. Lorsque la durée de vie atteint 0, le noeud ayant reçu le paquet, ne le transmet plus, mais émet vers l'émetteur un message de dépassement de durée de vie, en y insérant son identificateur. Ainsi, un procédé simple, mis en oeuvre par le logiciel TraceRoute, consiste à transmettre un paquet avec une durée de vie de 1, puis de 2, 3 etc. jusqu'à ce que finalement, le noeud cible soit atteint. En mémorisant à chaque fois, le noeud émetteur du message de dépassement de durée de vie, on peut reconstituer le chemin complet vers le noeud cible.

Toutefois, un tel procédé présente l'inconvénient majeur de nécessiter un grand nombre de paquets. En effet, dans un réseau de données de grandeur réel, la taille des chemins peut être importante et donc impliquer un nombre trop important de paquets et de messages de dépassement de durée de vie.

Une méthode similaire a été présentée dans le brevet américain US 5675741 intitulé *« Method and apparaturs for determining a communications path between* two *nodes in an Internet Protocol (IP) network »*. Il s'agit, là aussi, d'un procédé itératif. Le nombre de paquets transmis est donc proportionnel à la taille du chemin cherché. Le procédé peut donc conduire à un engorgement du réseau, du fait de la multiplication de ces messages de découverte de chemin.

Le but de la présente invention est donc de réduire le nombre de paquets, et donc l'encombrement du réseau de données, nécessaire pour déterminer un chemin complet entre deux noeuds.

Pour ce faire, l'invention a pour objet un procédé de détermination d'un chemin entre un noeud d'origine et un noeud cible d'un réseau de données de type TCP/IP, consistant à définir une fonction de recherche de chemin, ayant pour paramètre une distance de début, et une distance de fin et comprenant les étapes suivantes :
- arrêter le traitement récursif de la fonction, si les distances de début et de fin diffèrent d'une unité,
- envoyer un message vers le noeud cible, avec une durée de vie égale à une valeur intermédiaire comprise entre les distances de début et de fin,
- recevoir une réponse,
   - Si la réponse provient du noeud cible, alors on le mémorise dans la liste des noeuds connus, et on exécute récursivement la fonction de recherche avec comme paramètres la distance de début et la distance du noeud cible,
   - Si la réponse est un message de dépassement provenant d'un noeud intermédiaire faisant partie de la liste des noeuds connus, alors on exécute récursivement la fonction de recherche avec comme paramètres la distance du noeud intermédiaire et la distance de fin,
   - Si la réponse est un message de dépassement provenant d'un noeud intermédiaire ne faisant pas partie de la liste des noeuds connus, alors on mémorise le noeud intermédiaire dans la liste des noeuds connus, et on exécute récursivement la fonction de recherche, une première fois avec comme paramètres la distance de début et la distance du noeud intermédiaire, et une seconde fois avec comme paramètres la distance du noeud intermédiaire et la distance de fin.

Le procédé consiste alors à exécuter initialement cette fonction de recherche de chemin avec une distance de début égale à 0.

Ainsi, par l'utilisation d'un procédé dichotomique, on peut sensiblement réduire le nombre de paquets transmis. Celui-ci devient en effet de l'ordre de grandeur du logarithme du chemin complet.

L'invention et ses avantages apparaîtront de façon plus claire dans la description qui va suivre, en liaison avec les figures jointes.

La figure 1, précédemment commentée, représente un réseau de données et une application possible de l'invention.

Les figures 2a, 2b et 2c illustrent les trois situations possibles, après réception d'une réponse, selon le procédé de l'invention.

La figure 3 schématise un exemple pratique de mise en oeuvre de l'invention.

La première étape du procédé selon l'invention consiste à exécuter la fonction de recherche de chemin en lui spécifiant une distance de début égale à 0, et une distance de fin préférentiellement égale au double de la moyenne des distances des noeuds compris dans la liste des noeuds connus.

La justification de cette dernière valeur est statistique : on suppose que la distance du noeud cible est égale à la moyenne des distances des noeuds que l'on connaît déjà, et l'on considère que le noeud cible se trouve à une distance au plus égale au double de cette valeur moyenne.

La fonction de recherche de chemin envoi, en premier lieu, un message vers le noeud cible, ayant une durée de vie fixée.

La fixation d'une durée de vie à un message peut se faire en utilisant le champ TTL (Time To Live) ainsi que spécifié dans le RFC 791. Ce champ TTL est décrémenté d'une unité à chaque noeud traversé par le message. Lorsqu'il atteint 0, le message n'est plus transmis et un message de dépassement de durée de vie est transmis vers l'émetteur de ce message.

Typiquement, donc, ce message est un message ICMP ECHO, conformément au protocole ICMP (Internet Control Message Protocol), tel que défini dans le RFC 792.

Le message de dépassement de durée de vie est un message du type ICMP "TTL exceeded", conforme à ce même protocole.

Conformément à une caractéristique de l'invention, lorsque le noeud cible reçoit le message ICMP Echo, il répond à l'émetteur par un message contenant au moins son identificateur.

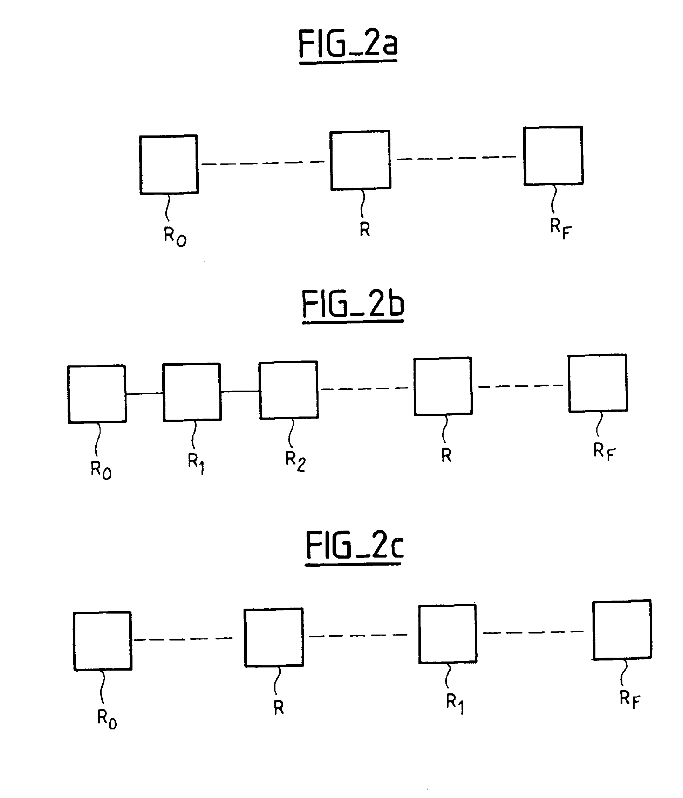

Ainsi, le noeud mettant en oeuvre le procédé selon l'invention se trouve devant trois situations illustrées par les figures 2a à 2c. Dans ces figures, les références Rₒ et R_{F} représentent, respectivement, les noeuds d'origines et de fin.

Le cas où la réponse provient du noeud cible est illustré par la figure 2a. Cela signifie que le noeud cible, R, se trouve à une distance plus courte que prévue. On exécute donc la fonction de recherche (récursivement) en lui fixant la même distance de début (donc originairement, 0) et une distance de fin égale à la distance du noeud cible. Autrement dit, on recherche le chemin menant jusqu'à ce noeud cible, R.

Le cas où la réponse est un message de dépassement provenant d'un noeud intermédiaire faisant partie de la liste des noeuds connus est illustré par la figure 2b. Il représente cette fois-ci le cas où le noeud cible, R, est plus loin qu'escompté. Toutefois, comme on connaissait déjà le noeud qui a répondu, R₂, on doit rechercher le noeud cible entre ce noeud intermédiaire et le noeud correspondant à la distance de fin.

On exécute donc la fonction de recherche avec comme paramètres la distance du noeud intermédiaire, R₂, et la distance de fin.

Le troisième cas correspond à la situation où la réponse est un message de dépassement de durée de vie, comme dans le cas précédent, mais cette fois-ci provenant d'un noeud intermédiaire ne faisant pas partie de la liste des noeuds connus. Cette situation est illustrée par la figure 2c. Elle représente le cas où le noeud cible est plus loin que prévu, et où le noeud intermédiaire, R₁, n'est pas dans la liste des noeuds connus. On doit donc à la fois rechercher le noeud cible, R, qui se trouve forcément au delà du noeud intermédiaire R₁, et rechercher le chemin menant à ce noeud intermédiaire.

Dans cette situation, on mémorise le noeud intermédiaire dans la liste des noeuds connus, et on exécute récursivement la fonction de recherche, une première fois avec comme paramètres la distance de début et la distance du noeud intermédiaire, et une seconde fois avec comme paramètres la distance du noeud intermédiaire et la distance de fin,

On arrête le traitement récursif lorsque les distances de début et de fin ne diffèrent que d'une unité.

La figure 3 illustre un exemple de mise en oeuvre du procédé selon l'invention.

Les références a, b... k représentent les noeuds d'un chemin. Le noeud a est le noeud sur lequel est mis en oeuvre le procédé de détermination de chemin. On suppose que la longueur moyenne des chemins connus est de 5, et que le noeud cible est le noeud i. On suppose aussi que tous les noeuds jusqu'au noeud f inclus font parties de la liste des noeuds connus.

Dans un premier temps, on exécute la fonction de recherche de chemin avec comme paramètres 0 et 10 (2 fois la longueur moyenne des chemins connus).

Un paquet m₁ est alors envoyé à destination du noeud i avec une durée de vie égale à 5 (moyenne entre 0 et 10).

Le paquet arrive au noeud f, qui renvoi un message de dépassement de durée de vie.

Comme le noeud f fait partie de la liste des noeuds connus, on exécute alors la fonction de recherche de chemin avec comme paramètres 5 et 10.

Un deuxième paquet, m₂, est alors émis à destination du noeud i, avec une durée de vie égale à 7 (moyenne tronquée de 5 et 10).

Le paquet arrive au noeud h qui renvoi un message de dépassement de durée de vie.

Le noeud h ne fait pas partie de la liste des noeuds connus.

On l'ajoute donc dans la liste des noeuds connus, et on exécute deux fois la fonction de recherche de chemin.
- Une première fois, avec pour paramètres 5 (ancienne distance de début) et 7 (distance du noeud h)
- Une seconde fois, avec pour paramètres 7 (distance du noeud h) et 10 (ancienne distance de fin).

Dans la première exécution de la fonction de recherche de chemin, un paquet m₃ₐ est envoyé à destination du noeud i, avec une durée de vie égale à 6, moyenne des deux paramètres 5 et 7.

Le paquet m₃ₐ arrive donc au noeud g, qui renvoi un message de dépassement de durée de vie.

Ce noeud g ne fait pas partie de la liste des noeuds connus. Il y est donc ajouté.

Comme les distances 5 et 6 d'une part, et 6 et 7 d'autre part, ne différent que d'une unité, le traitement récursif s'arrête ici.

Dans la seconde exécution de la fonction de recherche de chemin, un paquet m_{3b} est envoyé à destination du noeud i avec une durée de vie égale à 7, moyenne tronquée des deux paramètres 7 et 10.

Le paquet m_{3b} arrive au noeud i qui est le noeud cible. Ce noeud i répond alors au noeud en insérant son identificateur dans ce message de réponse.

A la réception de ce message, le noeud a inséré le noeud i dans la liste des noeuds connus, pour les mêmes raisons que pour la première exécution, le traitement récursif s'arrête ici.

Ainsi, moyennant l'émission de 4 paquets, m₁, m₂, m₃ₐ et m_{3b}, le noeud i ainsi que le chemin complet y parvenant ont été trouvés et ajoutés à la liste des noeuds connus.

## Revendications

1. Procédé de détermination d'un chemin entre un noeud d'origine (a) et un noeud cible (i) d'un réseau de données de type TCP/IP, **caractérisé en ce qu'**il consiste à définir une fonction de recherche de chemin, ayant pour paramètres une distance de début et une distance de fin, utilisant une liste de noeuds connus et comprenant les étapes suivantes:
• arrêter le traitement récursif de la fonction, si les distances de début et de fin diffèrent d'une unité,
• envoyer un message (m₁, m₂, m₃ₐ, m_{3b}) vers ledit noeud cible (i), avec une durée de vie égale à une valeur intermédiaire comprise entre les distances de début et de fin,
• recevoir une réponse,
- Si ladite réponse provient du noeud cible (i), alors on le mémorise dans la liste des noeuds connus, et on exécute récursivement la fonction de recherche avec comme paramètres la distance de début et la distance du noeud cible,
- Si ladite réponse est un message de dépassement provenant d'un noeud intermédiaire (f) faisant partie de ladite liste des noeuds connus, alors on exécute récursivement la fonction de recherche avec comme paramètres la distance du noeud intermédiaire et ladite distance de fin,
- Si ladite réponse est un message de dépassement provenant d'un noeud intermédiaire (g, h) ne faisant pas partie de ladite liste des noeuds connus, alors on mémorise ledit noeud intermédiaire (g, h) dans la liste des noeuds connus, et on exécute récursivement la fonction de recherche, une première fois avec comme paramètres la distance de début et la distance du noeud intermédiaire, et une seconde fois avec comme paramètres la distance du noeud intermédiaire et la distance de fin,
et à exécuter initialement cette fonction de recherche de chemin, avec une distance de début égale à 0.

2. Procédé selon la revendication 1, dans lequel ladite valeur intermédiaire est égale à la moyenne des distances de début et de fin.

3. Procédé selon l'une des revendications 1 ou 2, dans lequel la distance de fin est initialement fixée au double de la moyenne des distances des noeuds compris dans ladite liste des noeuds connus.

4. Procédé selon l'une des revendications précédentes, dans lequel ladite durée de vie est enregistrée dans un champ TTL, Time To Live, conforme, au RFC 791.

5. Procédé selon l'une des revendications précédentes, dans lequel ledit message et ladite réponse sont conformes au protocole ICMP, défini par le RFC 792.

6. Logiciel disposant de moyens pour mettre en oeuvre le procédé selon l'une des revendications 1 à 5 lorsqu'il est executé par un ordinateur.

## Claims

1. A method of tracing a route between an origin node (a) and a target node (i) of a TCP/IP data network, the method being **characterized in that** it consists in defining a route tracing function having for parameters a start distance and an end distance, using a list of known nodes, and including the following steps:
• stopping the recursive processing of the function if the start and end difference differ by one unit,
• sending a message (m₁, m₂, m₃ₐ, m_{3b}) to said target node (i), with a time to live equal to an intermediate value between the start and end distances,
• receiving a response and:
- if said response comes from the target node (i), storing it in the list of known nodes and executing the tracing function recursively with the start distance and the target node distance as parameters,
- if said response is a Time To Live Exceeded message coming from an intermediate node (f) in said list of known nodes, executing the tracing function recursively with the intermediate node distance and said end distance as parameters, and
- if said response is a Time To Live Exceeded message coming from an intermediate node (g, h) that is not in said list of known nodes, storing said intermediate node (g, h) in the list of known nodes and executing the tracing function recursively, a first time with the start distance and the intermediate node distance as parameters and a second time with the intermediate node distance and the end distance as parameters, and
• initially executing said route tracing function with a start distance equal to 0.

2. A method according to claim 1, wherein said intermediate value is equal to the average of the start and end distances.

3. A method according to either claim 1 or claim 2, wherein the end distance is initially fixed at twice the average of the distances of the nodes in said list of known nodes.

4. A method according to any preceding claim, wherein said time to live is stored in a Time To Live (TTL) field conforming to RFC 791.

5. A method according to any preceding claim, wherein said message and said response conform to the ICMP defined by RFC 792.

6. Software including means for implementing the method according to any of claims 1 to 5 when executed by a computer.

## Patentansprüche

1. Verfahren zur Festlegung eines Weges zwischen einem Ursprungsknoten (a) und einem Zielknoten (i) eines Datennetzes vom TCP/IP-Typ, **dadurch gekennzeichnet, dass** es darin besteht, eine Wegsuchfunktion zu definieren, die als Parameter s eine Anfangsdistanz und eine Enddistanz hat, eine Liste bekannter Knoten verwendet und die folgenden Schritte beinhaltet:
• Beenden der rekursiven Verarbeitung der Funktion, wenn sich die Anfangs- und die Enddistanz um eine Einheit unterscheiden,
• Versenden einer Meldung (m₁, m₂, m₃ₐ und m_{3b}) an den besagten Zielknoten (i) mit einer Lebensdauer gleich einem Mittelwert, der zwischen der Anfangs- und der Enddistanz liegt,
• Empfangen einer Antwort, wobei für den Fall,
- dass die besagte Antwort vom Zielknoten (i) kommt, dieser in der Liste der bekannten Knoten gespeichert und rekursiv die Suchfunktion mit der Anfangsdistanz und der Distanz des Zielknotens als Parameter ausgeführt wird,
- dass die besagte Antwort eine Zeitüberschreitungsmeldung ist, die von einem Zwischenknoten (f) kommt, der in der besagten Liste der bekannten Knoten enthalten ist, rekursiv die Suchfunktion mit der Distanz des Zwischenknotens und der besagten Enddistanz als Parameter ausgeführt wird, und
- dass die besagte Antwort eine Zeitüberschreitungsmeldung ist, die von einem Zwischenknoten (g, h) kommt, der nicht in der besagten Liste der bekannten Knoten enthalten ist, der besagte Zwischenknoten (g, h) in der Liste der bekannten Knoten gespeichert und rekursiv die Suchfunktion ein erstes Mal mit der Anfangsdistanz und der Distanz des Zwischenknotens als Parameter und ein zweites Mal mit der Distanz des Zwischenknotens und der Enddistanz als Parameter ausgeführt wird, und
anfängliches Ausführen dieser Wegsuche mit einer Anfangsdistanz gleich 0.

2. Verfahren gemäß Anspruch 1, in welchem der besagte Zwischenwert gleich dem Mittelwert der Anfangs- und Enddistanzen ist.

3. Verfahren gemäß einem der Ansprüche 1 oder 2, in welchem die Enddistanz anfänglich auf das Doppelte des Mittelwertes der Distanzen der Knoten festgelegt wird, die in der besagten Liste der bekannten Knoten enthalten sind.

4. Verfahren gemäß einem der vorgenannten Ansprüche, in welchem die besagte Lebensdauer in einem Feld TTL, Time to Live, gemäß dem RFC 791 registriert wird.

5. Verfahren gemäß einem der vorgenannten Ansprüche, in welchem die besagte Meldung und die besagte Antwort konform zum Protokoll ICMP sind, das durch den RFC 792 definiert ist.

6. Software mit Mitteln zur Umsetzung des Verfahrens gemäß einem der Ansprüche 1 bis 5, wenn es von einem Rechner ausgeführt wird.
